# EUROPÄISCHE PATENTSCHRIFT

(11) **EP 2 005 699 B1**
(45) Veröffentlichungstag und Bekanntmachung des Hinweises auf die Patenterteilung: **20.12.2017**
(21) Anmeldenummer: 07726682.3
(22) Anmeldetag: 07.03.2007
(51) Int. Cl.: H04L 29/06, H04M 3/22, H04M 3/54, H04L 12/22, H04M 7/00

(54) **VERFAHREN FÜR LAWFUL INTERCEPTION BEI ANRUFWEITERSCHALTUNG IN EINEM PAKETORIENTIERTEN TELEKOMMUNIKATIONSNETZ**
METHOD FOR LAWFUL INTERCEPTION IN THE CASE OF CALL FORWARDING IN A PACKET-ORIENTED TELECOMMUNICATIONS NETWORK
PROCÉDÉ POUR L'INTERCEPTION LÉGALE EN CAS DE TRANSFERT D'APPELS DANS UN RÉSEAU DE COMMUNICATION ORIENTÉ PAR PAQUETS

(30) Priorität: 30.03.2006 DE 102006014921
(43) Veröffentlichungstag der Anmeldung: 24.12.2008
(73) Patentinhaber: HMD Global Oy, 02610 Espoo (FI)
(72) Erfinder: PAULIS, Herbert, A-1050 Wien (AT); SPALT, Bernhard, A-1150 Wien (AT)
(74) Vertreter: Brachmann, Roland W.
(86) Internationale Anmeldenummer: PCT/EP2007/052124
(87) Internationale Veröffentlichungsnummer: WO 2007/113068

(56) Entgegenhaltungen:
- EP-A- 1 111 892
- US-A1- 2004 185 836

## Beschreibung

Die Erfindung betrifft ein Verfahren für Lawful Interception bei Anrufweiterschaltung in einem paketorientierten Telekommunikationsnetz, in welchem Vermittlungsfunktionen von Servern zur Verfügung gestellt werden und wobei Verbindungen eines Teilnehmers mit Anrufweiterschaltung mittels Lawful Interception überwacht werden sollen.

In vielen Staaten der Welt besteht ein gewisses Interesse, Telekommunikationsvorgänge und -inhalte von Teilnehmer unter bestimmten Umständen überwachen zu können. Dabei sollen z.B. Telefongespräche abgehört, aber auch E-Mails, Kurzmittelungen (so genannte SMS), Faxe, etc. mitgelesen werden. Rechtliche Rahmenbedingungen und Grundlagen für eine Telekommunikationsüberwachung werden dabei meist in diversen nationalen Gesetzen und/oder Verordnungen des jeweiligen Staates - wie z.B. in einem Polizeigesetz, in einer Strafprozessordnung, in einem Verfassungsgesetz, in einer Telekommunikationsüberwachungsverordnung, etc. festgelegt. Von diesen Gesetzen und Verordnungen wird beispielsweise geregelt, dass die Telekommunikationsüberwachung nur zum Zweck einer Strafverfolgung durchgeführt werden darf und nur von einem Richter angeordnet werden kann.

Mit einem englischen Fachausdruck, der so genannten Lawful Interception (LI) wird dabei ein Sicherheitsprozess bezeichnet. Durch diesen wird von einem Betreiber eines Telekommunikationsnetzes oder einem Anbieter von Telekommunikationsdiensten (z.B. Internet-Provider, IP-Telefonie-Anbieter, etc.) einer zur Überwachung berechtigten staatlichen Stelle oder Behörde (z.B. Polizei, Zollfahndung, etc.), welche allgemein auch als Law Enforcement Agency (LEA) bezeichnet wird, Zugriff auf Telekommunikationsvorgänge und - inhalte (z.B. Telefongespräche, E-Mail- oder Faxverkehr, verbindungsrelevante Daten wie z.B. gewählte Rufnummer, Rufnummer eines eingehenden Anrufs, etc.) eines bestimmten Teilnehmers ermöglicht. Auf Deutsch wird Lawful Interception (LI) auch richterliches Mithören oder rechtmäßiges Abhören genannt. Bei Lawful Interception wird üblicherweise der staatlich befugten Stelle oder Behörde ein Aufschalten auf bestimmte Verbindungen und dadurch ein Abhören/Überwachen der dort laufenden Telekommunikationsvorgänge eines bestimmten Teilnehmers ermöglicht.

Üblicherweise wird zu diesem Zweck im Telekommunikationsnetz eine so genannte Lawful Interception-Schnittstelle für eine Datenübertragung zwischen dem Telekommunikationsnetzbetreiber oder Telekommunikationsdiensteanbieter und der überwachenden Stelle oder Behörde eingerichtet. Über diese Lawful Interception-Schnittstelle werden dann in einem Überwachungsfall beispielsweise Daten - wie z.B. Anrufinhalte, Faxdaten, verbindungsrelevante Daten, Inhalte von E-Mails oder Kurzmeldungen - meist in Echtzeit aus dem Telekommunikationsnetz zu einer Überwachungseinrichtung der gesetzliche ermächtigten Stelle oder Behörde übertragen.

Zur einfacheren Realisierung von Lawful Interception und um auch eine grenzüberschreitende - z.B. europaweite - Überwachung von Telekommunikationsvorgängen und -inhalten zu ermöglichen, sind für Lawful Interception und die entsprechenden Schnittstellen Standards und technische Spezifikationen entwickelt worden - wie z.B. ES 201 671 Telecommunications Security; Lawful Interception (LI); Handover Interface for Lawful Interception of Telecommunications Traffic; TS 101 232 Telecommunications Security; Lawful Interception (LI); Handover Specification for IP delivery, etc., welche vom Technical Committee on Lawful Interception (TC LI) des European Telecommmunications Standards Institute (ETSI) publiziert worden sind. Diese von der ETSI veröffentlichten Standards und technischen Spezifikationen für Lawful Interception werden hauptsächlich in Europa, in großen Teilen von Asien und teilweise auch in Australien verwendet. Von diesen Standards werden nicht nur sehr detailliert die Architektur eines Systems sowie die Schnittstellen für Lawful Interception beschrieben, sondern auch telekommunikations-netzspezifische Protokollanforderungen und Prozeduren, welche notwendig sind, um Daten der Telekommunikationsvorgänge eines überwachten Teilnehmers vom Telekommunikationsnetzbetreiber bzw. Anbieter von Telekommunikationsdiensten an die gesetzlich zur Überwachung ermächtigte Stelle oder Behörde zu übertragen.

In den USA wurden die Grundlagen für Lawful Interception im so genannten Communications Assistance for Law Enforcement Act (CALEA) definiert und durch Veröffentlichungen von verschiedenen Komitees der Alliance for Telecommunications Industry Solutions (ATIS) - wie PTSC LAES (Packet Technologies and Systems Committee Lawfully Authorized Electronic Surveillance) oder WTSC LI (Wireless Technologies and Systems Committee Lawful Intercept) - für verschiedenen Telekommunikationsnetztypen wie z.B. Mobilfunknetze, IP-basierte Netze, etc. ergänzt.

US 2004/0185836 A1 beschreibt ein Verfahren zur Breitstellung von Abhördiensten in einem Telekommunikationsnetzwerk, wobei eine Verbindung, an der ein abzuhörender Teilnehmer beteiligt ist, abgehört werden soll. Das Verfahren umfasst Media Gateways, die unter Kontrolle eines intelligenten Netzknotens oder Switch stehen der mit dem abzuhörenden Teilnehmer assoziiert ist, die auf einer Verbindungsbasis eine Punkt-zu-Mehrpunkt Kommunikationsverbindung zu einer Strafverfolgungsbehörde aufbauen, während sie gleichzeitig den Ende-zu-Ende Telefonie Service unterstützen der von dem anrufendem Teilnehmer und/oder dem angerufenem Teilnehmer ausgewählt wurde. Die Punkt-zu-Mehrpunkt Kommunikationsverbindung versorgt die Strafverfolgungsbehörde mit dem Nachrichtenverkehr der durch den anrufenden und den angerufenen Teilnehmer erzeugt wird.

EP 1111892 A2 beschreibt ein Verfahren zur Durchführung einer Internetprotokoll-, IP-, Netzwerk-Überwachung. Das Verfahren umfasst das Empfangen einer ersten Mitteilung die anzeigt, dass ein Endbenutzergerät unter Überwachung steht, als Antwort auf den Empfang der ersten Mitteilung Ableiten von Medienstrom-Identifikations-Information aus einer Anruf-Signalisierungs-Mitteilung die dem Endbenutzergerät zugeordnet ist, und Senden der Medienstrom-Identifikations-Information an einen Rand-Router, der dem Endbenutzergerät zugeordnet ist, um ein Kopieren des Medienstroms zu ermöglichen, der durch die Medienstrom-Identifikations-Information identifiziert ist.

Als Telekommunikationsnetz wird definitionsgemäß der Oberbegriff für alle Ressourcen verstanden, durch welche voneinander entfernte Netzzugangspunkte wie beispielsweise Endgeräte miteinander verbunden sind. Von Telekommunikationsnetzen werden Dienste wie beispielsweise die Übertragung von Daten oder Sprache von einem Zugangspunkt zu einem anderen Zugangspunkt zur Verfügung gestellt, um zwischen diesen Informationen in Form von Daten oder Sprache auszutauschen. Telekommunikationsnetze umfassen beispielsweise:
- leitungsvermittelte Netze - wie z.B. klassische Telefonfestnetz - so genannte Public Switched Telephone Networks (PSTN), ISDN-Netze oder Mobilfunknetze auf Basis von GSM, Circuit Switch-Teil des Universial Mobile Telecommunications System (UMTS), etc.
- und paketorientierte Telekommunikationsnetze, in welchen Informationen in Form von Datenpaketen übertragen werden - wie z.B. Datennetze oder paketorientierte Netzteile von Mobilfunknetzen - z.B. General Packet Radio Service (GPRS), welches eine Erweiterung des GSM-Mobilfunk-Standards um paketorientierte Datenübertragung darstellt, oder z.B. die so genannte Packet Switch Domain (der paketorientierte Teil) des Universial Mobile Telecommunications System (UMTS), für welches vom 3rd Generation Partnership Project oder 3GPP die Standards geliefert werden. Für UMTS wird z.B. in den so genannten Releases der Standards TS 33 107 und TS 33 108 der 3GPP Lawful Interception spezifiziert.

Von paketorientierten Telekommunikationsnetzen werden für die Übertragung von Daten in Paketform innerhalb des Netzes oder auch zwischen verschiedenen Netzen Protokolle eingesetzt. Wird für die Weiterleitung der Daten das so genannte Internet Protokoll IP eingesetzt, so werden diese paketorientierten Telekommunikationsnetze auch als IP-basierte Telekommunikationsnetze bezeichnet, wobei das weltweit bekannte IP-basierte Telekommunikationsnetz das Internet ist.

Durch die große Bedeutung des Internet Protokolls gibt es derzeit die Tendenz, Sprachübertragung über das Internet Protokoll (Voice-over-IP) in IP-basierten, fixen Telekommunikationsnetzen (z.B. Local Area Networks, Intranet, Internet) zu ermöglichen. Durch die Entwicklung neuer Standards bei den Mobilfunknetzen wie z.B. UMTS wird aber auch das Internet Protokoll in den paketorientierten Netzteilen (z.B. Packet Switched Domain bei UMTS) im Mobilfunkbereich eingesetzt. Dadurch wird einerseits Telefonie (Übertragung von Sprache) über das Internet Protokoll - das so genannte Voice-over-IP - und anderseits paketorientierte Datenübertragung von einem mobilen (paketorientierten, und meist IP-basierte) Telekommunikationsnetz ermöglicht.

Um eine für Dienste wie z.B. Voice-over-IP, Videotelefonie, Austausch von Multimediadaten, etc. notwendige Verbindung managen zu können, existieren derzeit zwei konkurrierende Standards für die Signalisierung: H.323 und SIP.

Der ITU-T Standard H.323 (ITU; International Telecommunication Union) wurde für eine Echtzeitübertragung von Diensten wie Sprach- und Videokommunikation in paketorientierten Telekommunikationsnetzen entwickelt. Als so genannter Umbrella-Standard beherbergt er eine Reihe von Protokollen, etwa für Signalisierung, Austausch von Endgerätefunktionalitäten und Statusinformationen sowie zur Verbindungs- und Datenflusskontrolle. Für die Datenübertragung zu bzw. von einem klassischen (leitungsvermittelnden) Telekommunikationsnetz werden in H.323 definierte Schnittstellenfunktionen beschrieben, die auf speziellen Rechnern - so genannten Gatekeepern - umgesetzt sind. H.323 basiert außerdem auf dem ISDN-Protokoll Q.931 der ITU und ist daher gut für Interworking zwischen ISDN und IP geeignet.

Das Session Initiation Protocol SIP wurde von der IETF (Internet Engineering Task Force) entwickelt. Der Standard definiert ein Signalisierungsprotokoll zum Aufbauen, Modifizieren und Beenden von Sitzungen mit zwei oder mehreren Teilnehmern. Das SIP-Protokoll dient ebenfalls der Übertragung von Daten über paketorientierte Telekommunikationsnetze und ist funktional mit den Protokollen gemäß dem ITU-T Standard H.323 vergleichbar. Das Session Initiation Protocol SIP kann interaktive Dienste einschließlich Sprache über paketorientierte Telekommunikationsnetze vermitteln, wobei diese Netze üblicherweise meist auch IP-basiert sind. Dabei ist das SIP-Protokoll für Signalisierung der Verbindung sowie die Lokalisierung und Registrierung von Teilnehmern zuständig. Insbesondere wird durch SIP auch eine Übermittlung einer Kennung eines Teilnehmers - einer so genannten SIP-Adresse bzw. SIP-URIs (Uniform Resource Indicators) oder den so genannten TEL-URIs sowie eine Anrufweiterleitung in paketorientierten Telekommunikationsnetzen ermöglicht.

Um spezielle Dienste wie z.B. Voice-over-IP oder paketorientierte Datenübertragung (z.B. E-Mail, Internetzugriff, etc.) mittels paketorientiertem Netzteil in einem Mobilfunknetz anbieten zu können, wird insbesondere in Verbindung mit SIP eine spezielle Architektur-Struktur - das so genannte IP Multimedia Subsystem IMS eingesetzt. Das IP Multimedia Subsystem kann aber auch für Wireless Local Area Networks (W-LAN) oder fixe, paketorientierte Telekommunikationsnetze verwendet werden, um multimediale Dienste wie z.B. Videotelefonie, Videokonferenzen, Austausch von Multimediadaten, etc. in paketorientierten Telekommunikationsnetzen anbieten zu können. Das IP Multimedia Subsystem ist vom 3rd Generation Partnership Project 3GPP in Zusammenarbeit mit der IETF in einer Vielzahl technischer Spezifikationen standardisiert worden und stellt eine offene, für Betreiber leicht in ihre Telekommunikationsnetzstruktur integrierbare und standardisierte Architektur-Struktur dar.

Ein Zugang zum IP Multimedia Subsystem ist z.B. über paketorientierte Telekommunikationsnetze (z.B. Ethernet, DSL, GPRS, UMTS, WLAN, etc.) beispielsweise mittels spezieller - üblicherweise SIP-fähiger - Endgeräte möglich. Für eine Anbindung aus klassischen - üblicherweise leitungsvermittelten - Telefonnetzen (z.B. dem Public Switched Telephone Network PSTN, ISDN-Netzen, GSM-Netzen, etc.) oder z.B. Voice-over-IP-Systemen auf Basis von H.323 werden eigene Schnittstellen-systeme - so genannten Media-Gateways - eingesetzt. Von einem Teilnehmer kann daher mittels verschiedener Methoden je nach dem verwendeten Netz (z.B. leitungsvermittelte Telefonnetz, Mobilfunknetz, W-LAN, etc.) auf das IP Multimedia Subsystem zugegriffen werden, wobei für den Zugang üblicherweise das Internet Protokoll IP eingesetzt wird. Weitere Details werden bei ETSI TISPAN in Kooperation mit 3GPP festgelegt.

Für die Nutzung der Dienste durch den Teilnehmer werden vom IP Multimedia Subsystem Vermittlungsfunktionen - so genannte Call Session Control-Funktionen CSCF, die von so genannten Vermittlungsrechnern des IP Multimedia Subsystems ausgeführt werden, zur Verfügung gestellt. Bei den Call Session Control-Funktionen kann zwischen der so genannten Proxy Call Session Control-Funktion (P-CSCF) und der so genannten Serving Call Session Control-Funktion (S-CSCF) unterschieden werden.

Die P-CSCF stellt dabei einen Erstkontaktpunkt zum IP Multimedia Subsystem für die Signalisierung einer Verbindung dar, wobei diese direkt von speziellen - meist SIP-fähigen - Endgeräten über ein paketorientiertes so genanntes Zugangsnetzwerk oder Access Network oder von einem Media-Gateway aus einem Zugangsnetzwerk oder Access Network eines anderen Telekommunikationsnetz (z.B. PSTN, ISDN-Netz, GSM-Netz, etc.) zum IP Multimedia Subsystem geleitet werden kann. Als Zugangsnetz oder Access Network wird dabei jener Teil eines Telekommunikationsnetzes bezeichnet, an welchen die Teilnehmer angeschlossen sind bzw. über welchen diese Zugang zu den angebotenen Diensten (z.B. Sprachtelefonie, IP-Telefonie, Zugriff auf das Internet, etc.) haben. Mit Hilfe der S-CSCF werden Aufbau und Ablauf einer Verbindung zwischen Teilnehmern oder zur Nutzung eines Dienstes kontrolliert und gesteuert. Von der S-CSCF wird dabei auch die Registrierung eines Teilnehmers durch eine Kennung (z.B. IP-Adresse, SIP-Adresse, etc.) und die Weiterleitung der Verbindung zur Nutzung von Diensten (z.B. IP-Telefonie, etc.) durchgeführt. Als Protokoll für das Management von Verbindungen wird üblicherweise das Session Initiation Protocol SIP verwendet.

Eine Spezifikation für Lawful Interception bei Verwendung eines IP Multimedia Subsystems wird von den auch für UMTS gültigen, technischen Spezifikation TS 33.107 und TS 33.108 der Release 7 der 3GPP beschrieben. Laut dieser technischen Spezifikationen der 3GPP werden alle SIP-Nachrichten von oder zu einem zu überwachenden Teilnehmer sowie alle für diesen Teilnehmer ausgeführten SIP-Nachrichten für eine Verbindung mittels IP Multimedia Subsystem von den Vermittlungsfunktionen P-CSCF und S-CSCF des IP Multimedia Subsystems mitdokumentiert und dann an über eine Lawful Interception-Schnittstelle und gegebenenfalls eine Media-Gateway an die Überwachungseinrichtung der gesetzlich zur Überwachung ermächtigte Stelle oder Behörde weitergeleitet. Dabei wird eine Kennung des überwachenden Teilnehmers - üblicherweise die so genannte SIP-Adresse - als so genannter Target Identifier verwendet (z.B. in einer speziellen Liste für zu überwachende Kennungen hinterlegt), um die Überwachung durch die Call Session Control-Funktionen (z.B. P-CSCF und/oder S-CSCF) anzustoßen.

Insbesondere durch Protokolle wie z.B. SIP wird es möglich, eine Anrufweiterschaltung auch in paketorientierten Telekommunikationsnetzen einem Teilnehmer zur Verfügung zu stellen. Als Anrufweiterschaltung wird ein Dienstmerkmal eines Telekommunikationsnetzes bezeichnet, bei dem eine eingehende Verbindung zu einer anderen Teilnehmerkennung (z.B. Rufnummer, etc.) weitergeschaltet wird.

Anrufweiterschaltung wird als Dienstmerkmal üblicherweise in leitungsvermittelten Telekommunikationsnetzen wie z.B. ISDN-Netzen, GSM-Netze oder vom Circuit Switch-Teil eines UMTS-Netzes bzw. von Nebenstellenanlagen angeboten. Für Lawful Interception bei Dienstmerkmalen wie Anrufweiterschaltung in einem leitungsvermittelten Telekommunikationsnetz werden z.B. von der ETSI in der Spezifikation ES 201 671 beschrieben. In den technischen Spezifikation TS 33.107 und TS 33.108 der Release 7 der 3GPP wird ebenfalls Lawful Interception für Anrufweiterschaltung - allerdings nur für den Circuit Switch-Teil eines UMTS-Netzes dargestellt.

Hat ein zu überwachender Teilnehmer in einem paketorientierten Telekommunikationsnetz z.B. für Voice-over-IP eine Anrufweiterschaltung eingerichtet, so wird zwar die Überwachung bei einer ankommenden Verbindung in jener üblicherweise von einem Server des Netzes zur Verfügung gestellten Vermittlungsfunktion, in welcher der Teilnehmer üblicherweise registriert ist, erkannt. Es wird allerdings die Anrufweiterschaltung an den rufenden Teilnehmer zurücksignalisiert. Die Verbindung für die Übertragung der Daten (z.B. Gesprächsinhalt, etc.) wird dann aber direkt zwischen dem Zugangspunkt des rufenden Teilnehmers und einem zu einem Ziel der Anrufweiterschaltung gehörenden Zugangspunkt aufgebaut. Wird die Teilnehmerkennung dieses Zugangspunktes nicht überwacht, so besteht keine Möglichkeit den Inhalt der Datenübertragung abzuhören, da dieser nicht an die zur Überwachung ermächtigte Stelle oder Behörde weitergeleitet wird. Von der zur Überwachung ermächtigten Stelle oder Behörde kann beispielsweise nur mehr festgestellt werden, dass der zu überwachende Teilnehmer eine Anrufweiterschaltung im paketorientierten Telekommunikationsnetz eingerichtet hat.

Der vorliegenden Erfindung liegt daher die Aufgabe zugrunde, ein Verfahren anzugeben, durch welches es einer zur Überwachung ermächtigten Stelle oder Behörde ermöglicht wird, auch bei Anrufweiterschaltung eines zu überwachenden Teilnehmers in einem paketorientierten Telekommunikationsnetz Inhalte einer weitergeleiteten Verbindung zu überwachen.

Die Lösung der Aufgabe erfolgt durch ein Verfahren der eingangs angeführten Art, wobei einer ersten Vermittlungsfunktion, welche für einen angerufenen Teilnehmer mit Anrufweiterschaltung zuständig ist, eine Überwachung der Verbindungen dieses Teilnehmers bekannt gegeben wird, dann von der ersten Vermittlungsfunktion eine Kennung dieses Teilnehmers in einen vorgegebenen Parameter eines Vermittlungsprotokolls geschrieben wird, dann erst eine Signalisierung der Anrufweiterschaltung an eine zweite Vermittlungsfunktion, welche für einen anrufenden Teilnehmer zuständig ist, durchgeführt wird und dann von einer dritten Vermittlungsfunktion, zu welcher die Verbindung weitergeschaltet worden ist, die Überwachung des angerufenen Teilnehmers anhand des vorgegebenen Parameters des Vermittlungsprotokolls erkannt und dann eingeleitet wird.

Der Hauptaspekt der erfindungsgemäßen Lösung besteht darin, dass durch das erfindungsgemäße Verfahren die zur Überwachung ermächtigte Stelle oder Behörde die Überwachung des Teilnehmers auch bei Anrufweiterschaltung durchführen kann, da die Überwachung von der Vermittlungsfunktion, zu der die Verbindung weitergeschaltet wurde, eingeleitet wird. Auf diese Weise können nun die Inhalte der Datenübertragung von einem zu einem Ziel der Anrufweiterschaltung gehörenden Zugangspunkt abgehört werden.

Zur Lösung der Aufgabe ist auch vorgesehen, dass im IP basierten Telekommunikationsnetz für den zu überwachenden Teilnehmer mehrere Anrufweiterschaltungen in Serie durchgeführt werden können, damit für den Fall, dass für die Teilnehmerkennung, zu der die Verbindung weitergeleitet wird, wiederum eine Anrufumleitung eingerichtet wird, von der letzten Vermittlungsfunktion, zu der die Verbindung umgeleitet wurde, geprüft wird, ob in den vorgegebenen Parametern eine Kennung eingetragen ist, die überwacht werden soll. Ist einen der eingetragenen Kennungen eine zu überwachende, so wird von der letzten Vermittlungsfunktion die Überwachung des zur Kennung gehörenden Teilnehmers eingeleitet.

Es ist vorteilhaft, wenn im IP basierten Telekommunikationsnetz als Vermittlungsprotokoll das Session Initiation Protocol SIP eingesetzt wird, da das SIP-Protokoll insbesondere im RFC 3261 der IETF spezifiziert ist. Außerdem ist SIP für Signalisierung der Verbindung sowie die Lokalisierung und Registrierung von Teilnehmern zuständig, wodurch von SIP auch eine Übermittlung einer Kennung eines Teilnehmers - der so genannten SIP-Adresse oder des so genannten SIP-URI (Uniform Resource Indicator) ermöglicht wird.

Bevorzugte Ausgestaltungen der Erfindung sehen vor, dass entweder die Kennung des angerufenen und zu überwachenden Teilnehmers in den SIP History-Info Header gemäß RFC 4244 oder die Kennung des angerufenen und zu überwachenden Teilnehmers in den SIP Division Header gemäß IETF draft-levy-sip-diversion-08 eingetragen wird. Im RFC 4244 der IEFT, in welchem der SIP History-Info Header spezifiziert wird, werden Standardmechanismen definiert, um Informationen über den Ablauf einer Verbindung (z.B. warum oder wie eine Verbindung zu einem bestimmten Server oder Zugangspunkt geleitet worden ist) aufzuzeichnen. Aus dem SIP History-Info Header kann daher auch eine Anrufweiterschaltung ausgelesen werden. Daher ist es vorteilhaft, dass die Kennung des angerufenen und zu überwachenden Teilnehmers in den SIP History-Info Header eingetragen wird. In der Diversion Indication in SIP gemäß dem IETF draft-levy-sip-diversion-08 wird eine Erweiterung des SIP-Protokolls vorgeschlagen, durch welche vom angerufenen Teilnehmerendgerät festgestellt werden kann, von welchem Teilnehmer und warum eine Verbindung umgeleitet worden ist. Von dieser Erweiterung wird der so genannte SIP Diversion Header definiert, von welchem die Information über die Umleitung der Verbindung übertragen wird.

Günstig ist es, wenn das IP basierte Telekommunikationsnetz ein IP Multimedia Subsystem umfasst, von welchem die Vermittlungsfunktion als Funktion zur Verfügung gestellt wird, da für das IP Multimedia Subsystem bereits von der 3GPP in den technischen Spezifikation TS 33.107 und TS 33.108 ein Konzept für Lawful Interception ohne Anrufweiterschaltung beschrieben worden ist, auf welches durch das erfindungsgemäße Verfahren auf einfache Weise erweitert werden kann, wenn vom zu überwachenden Teilnehmer eine Anrufweiterschaltung eingerichtet worden ist, indem von den Vermittlungsfunktionen des IP Multimedia Subsystems, zu welchem die Verbindung weitergeleitet wird, geprüft wird, ob der Teilnehmer mit der Anrufweiterschaltung ein zu überwachender Teilnehmer ist - z.B. durch Vergleich der in einer SIP-Nachricht eingetragenen Teilnehmerkennung mit einer speziellen Liste, die zu überwachende Kennungen umfasst.

Es empfiehlt sich auch, dass im IP basierten Telekommunikationsnetz als Vermittlungsprotokoll das H.323-Protokoll verwendet wird, weil H.323 als Standard der ITU-T speziell für Echtzeitübertragungen von Diensten wie Sprach- und Videokommunikation in paket-orientierten Netzen entwickelt worden ist.

Bevorzugter Weise werden Inhalte der weitergeleiteten Verbindung über ein Media-Gateway oder über einen Gatekeeper oder Serving GPRS Support Node oder Session Border Controller an eine überwachende Instanz geleitet, weil mittels dieser Netzelemente auf einfache Weise die Inhalte an das Netz der zur Überwachung ermächtigte Stelle oder Behörde übermittelt werden können.

Vorzugsweise wird die Überwachung (ÜW_TlnB) der Inhalte der weitergeleiteten Verbindung im Media-Gateway oder Serving GPRS Support Node oder Session Border Controller ohne Wechselwirkung mit der Vermittlungsfunktion eingeleitet und durchgeführt wird, wobei in diesem Netzelementen ein Teilnehmer ebenfalls als zu überwachender Teilnehmer (z.B. anhand einer dort abgelegten speziellen Liste mit zu überwachenden Kennungen) identifiziert werden kann und dadurch die Überwachung dieses Teilnehmers von extern nicht erkannt wird.

Es ist vorteilhaft, wenn Lawful Interception nur für bestimmte von Servern des paketorientierten Telekommunikationsnetzes zur Verfügung gestellten Vermittlungsfunktionen und/oder in Netzelementen wie dem Media-Gateway oder Serving GPRS Support Node oder Session Border Controller aktiviert wird. Denn dadurch können unterschiedliche Überwachungsanforderungen, die meist durch nationale Gesetze bestimmt werden, der einzelnen Länder erfüllt werden, wenn eine länderübergreifende Überwachung durchgeführt werden muss.

Die Erfindung wird nachfolgend in beispielhafter Weise unter Bezugnahme auf die beigefügten Figuren näher erläutert. Es zeigen:
- Fig.1: den schematischen Ablauf von Lawful Interception bei Anrufweiterschaltung in einem paketorientierten Telekommunikationsnetz mit IP Multimedia Subsystem
- Fig.2: den schematischen Ablauf des erfindungsgemäßen Verfahren für Lawful Interception bei Anrufweiterschaltung in einem paketorientierten Telekommunikationsnetz mit IP Multimedia Subsystem

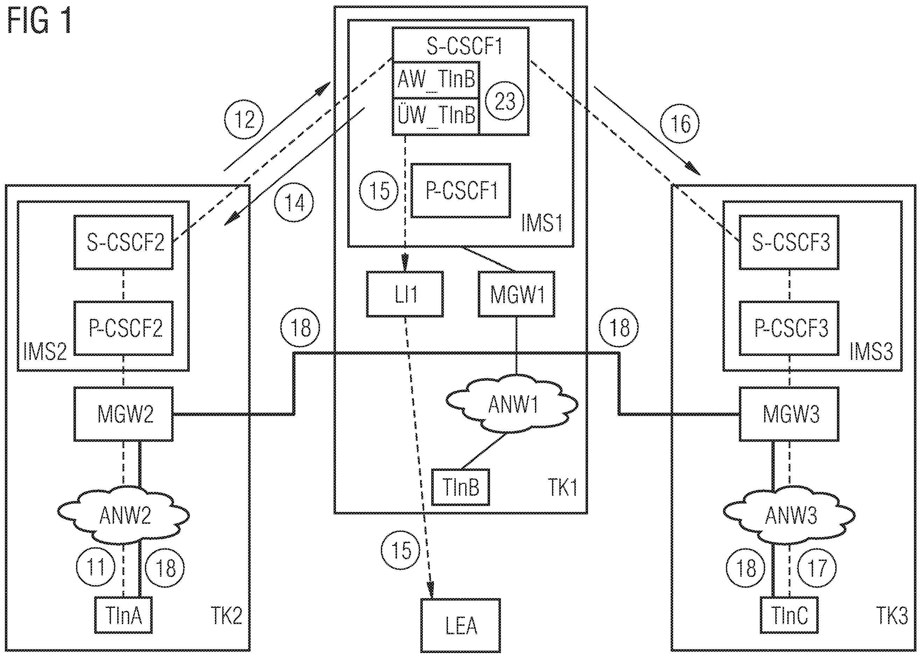

Figur 1 zeigt in beispielhafter Weise paketorientierte Telekommunikationsnetze TK1, TK2 und TK3, an welche beispielsweise über Zugangsnetze ANW1, ANW2, ANW3 Teilnehmer Tln A, Tln B, Tln C angebunden sind. Die paketorientierten Telekommunikationsnetze TK1, TK2, TK3 umfassen jeweils ein IP Multimedia Subsystem IMS1, IMS2, IMS3. In den IP Multimedia Subsystemen sind beispielhaft Vermittlungsfunktionen S-CSCF1, S-CSCF2, S-CSCF3, P-CSCF1, P-CSCF2, P-CSCF3 dargestellt, welche in so genannte Proxy Call Session Control-Funktionen P-CSCF1, P-CSCF2, P-CSCF3 und so genannte Serving Call Session Control-Funktionen S-CSCF1, S-CSCF2, S-CSCF3 unterschieden werden.

Die Proxy Call Session Control-Funktion P-CSCF1, P-CSCF2, P-CSCF3 stellt dabei einen Erstkontaktpunkt zum jeweiligen IP Multimedia Subsystem IMS1, IMS2, IMS3 für eine Signalisierung einer Verbindung dar. Dabei wird die Signalisierung z.B. vom jeweiligen Zugangsnetz ANW1, ANW2, ANW3, an welches der jeweilige Teilnehmer Tln A, Tln B, Tln C an das jeweiligen paketorientierte Telekommunikationsnetz TK1, TK2, TK3 angebundenen ist, z.B. über ein Media-Gateway MGW1, MGW2, MGW3 zur Proxy Call Session Control-Funktion P-CSCF1, P-CSCF2, P-CSCF3 des jeweiligen IP Multimedia Subsystem IMS1, IMS2, IMS3 geleitet. Mit einem speziellen - üblicherweise SIP-fähigen Endgerät kann die Signalisierung auch direkt aus dem Zugangsnetz ANW1, ANW2, ANW3 an die Proxy Call Session Control-Funktion P-CSCF1, P-CSCF2, P-CSCF3 des IP Multimedia Subsystem IMS1, IMS2, IMS3 übertragen werden.

Mit Hilfe der Serving Call Session Control-Funktion S-CSCF1, S-CSCF2, S-CSCF3 des IP Multimedia Subsystem IMS1, IMS2, IMS3 werden Aufbau und Ablauf einer Verbindung zwischen den Teilnehmern Tln A, Tln B, Tln C oder zur Nutzung eines Dienstes kontrolliert und gesteuert. Von der Serving Call Session Control-Funktion S-CSCF1, S-CSCF2, S-CSCF3 des IP Multimedia Subsystem IMS1, IMS2, IMS3 wird dabei auch eine Registrierung der Teilnehmer Tln A, Tln B, Tln C durch eine Kennung wie z.B. IP-Adresse, SIP-URL, etc. und die Signalisierung für eine Weiterleitung der Verbindung zur Nutzung von Diensten (z.B. IP-Telefonie, etc.) durchgeführt. Als Protokoll für das Management von Verbindungen wird üblicherweise das Session Initiation Protocol SIP verwendet.

Für das paketorientierte Telekommunikationsnetz TK1 ist eine Lawful Interception-Schnittstelle LI1 dargestellt, über welche überwachungsrelevante Daten (z.B. Gesprächsinhalte, E-Mail-Inhalte, verbindungsrelevante Daten, etc.) an eine Überwachungseinrichtung LEA einer zur Überwachung berechtigten Stelle oder Behörde wie z.B. Polizei, Zollfahndung, etc. übertragen werden können.

Soll nun beispielsweise ein Teilnehmer Tln B des paketorientierten Telekommunikationsnetzes TK1 überwacht werden, so wird die Kennung (z.B. SIP-URI) dieses Teilnehmers Tln B als so genannter Target Identifier gekennzeichnet (z.B. in eine spezielle Liste eingetragen, die auf den Vermittlungsfunktionen S-CSCF1, S-CSCF2, S-CSCF3, P-CSCF1, P-CSCF2, P-CSCF3 abgelegt ist). Dadurch wird eine Überwachung ÜW_TlnB durch die Serving Call Session Control-Funktion S-CSCF1, in der der Teilnehmer Tln B üblicherweise lokalisiert ist, erkannt und angestoßen werden kann.

Zusätzlich ist für die Kennung des zu überwachenden Teilnehmers Tln B eine Anrufweiterschaltung AW_TlnB in der für die Teilnehmerregistrierung zuständigen Serving Call Session Control-Funktion S-CSCF1 eingerichtet. Durch diese Anrufweiterschaltung AW_TlnB wird eine Verbindung, die an den Teilnehmer Tln B gerichtet ist, an beispielsweise einen Zugangspunkt eines Teilnehmers Tln C weitergeleitet, dessen Kennung nicht als Target Identifier für eine Überwachung gekennzeichnet ist.

Wird nun von einem an das paketorientierte Telekommunikationsnetz TK2 angebundenen Teilnehmer Tln A eine Verbindung zum zu überwachenden Teilnehmer Tln B des paketorientierten Telekommunikationsnetz TK1 aufgebaut, so wird in einem ersten Schritt 11 der Verbindungsaufbau von Zugangsnetz ANW2 über das Media-Gateway MGW2 zur Proxy Call Session Control-Funktion P-CSCF2 der IP Multimedia Subsystems IMS2 signalisiert, von welcher die Signalisierung an die Serving Call Session Control-Funktion S-CSCF2 des IP Multimedia Subsystems IMS2 weitergeleitet wird. In einem zweiten Schritt 12 wird von der Serving Call Session Control-Funktion S-CSCF2 des IP Multimedia Subsystems IMS2 die Serving Call Session Control-Funktion S-CSCF1 des IP Multimedia Subsystems IMS2 kontaktiert und eine Anfrage für einen Verbindungsaufbau mit dem Teilnehmer Tln B z.B. in Form einer SIP-Nachricht zur Serving Call Session Control-Funktion S-CSCF1 übertragen.

In einem dritten Schritt 13 wird von der Serving Call Session Control-Funktion S-CSCF1 erkannt, dass einerseits für den Teilnehmer Tln B eine Anrufweiterschaltung AW_TlnB zum Zugangspunkt des Teilnehmers Tln C eingerichtet ist und dass andererseits die Kennung des Teilnehmers Tln B für eine Überwachung ÜW_TlnB gekennzeichnet ist. Daher wird in einem vierten Schritt 14 die Anrufweiterschaltung z.B. mittels einer SIP-Nachricht an die Serving Call Session Control-Funktion S-CSCF2 des IP Multimedia Subsystem IMS2 im paketorientierten Telekommunikationsnetz TK2 des rufenden Teilnehmers Tln A signalisiert. In einem fünften Schritt 15 wird aufgrund der Überwachung ÜW_TlnB des Teilnehmers Tln B die Signalisierung - z.B. eine Kopie der SIP-Nachricht - der Anrufweiterschaltung über die Lawful Interception-Schnittstelle LI1 an die Überwachungseinrichtung LEA der zur Überwachung berechtigten Stelle oder Behörde weitergeleitet.

In einem sechsten Schritt 16 wird nun aufgrund der Anrufweiterschaltung AW_TlnB eine Anfrage für einen Verbindungsaufbau mit dem Zugangspunkt des Teilnehmers Tln C z.B. in Form einer SIP-Nachricht zur Serving Call Session Control-Funktion S-CSCF3 des IP Multimedia Subsystems IMS3 im paketorientierten Telekommunikationsnetz TK3 gesendet. In einem siebenten Schritt 17 wird die Signalisierung dann vom IP Multimedia Subsystem IMS3 beispielsweise über ein Media-Gateway MGW3 zum Zugangsnetz ANW3 - und damit zum Zugangspunkt des Teilnehmers Tln C übertragen. In einem achten Schritt 18 wird dann die Verbindung für eine Datenübertragung (z.B. IP-Telefonie, E-Mail, etc.) über die jeweiligen Media-Gateways MGW2, MGW3 der jeweiligen paketorientierten Telekommunikationsnetze TK2, TK3 direkt zwischen dem rufenden Teilnehmer Tln A (bzw. seinem Zugangspunkt) und dem Zugangspunkt des Teilnehmers Tln C aufgebaut.

Wird der Teilnehmer Tln C, zu welchem die Verbindung weitergeleitet worden ist, nicht überwacht, so werden Inhalte der Verbindung (z.B. Gesprächsinhalte, Daten, etc.) nicht an die Überwachungseinrichtung LEA der zur Überwachung berechtigten Stelle oder Behörde übertragen und die Verbindung kann damit nicht abgehört werden.

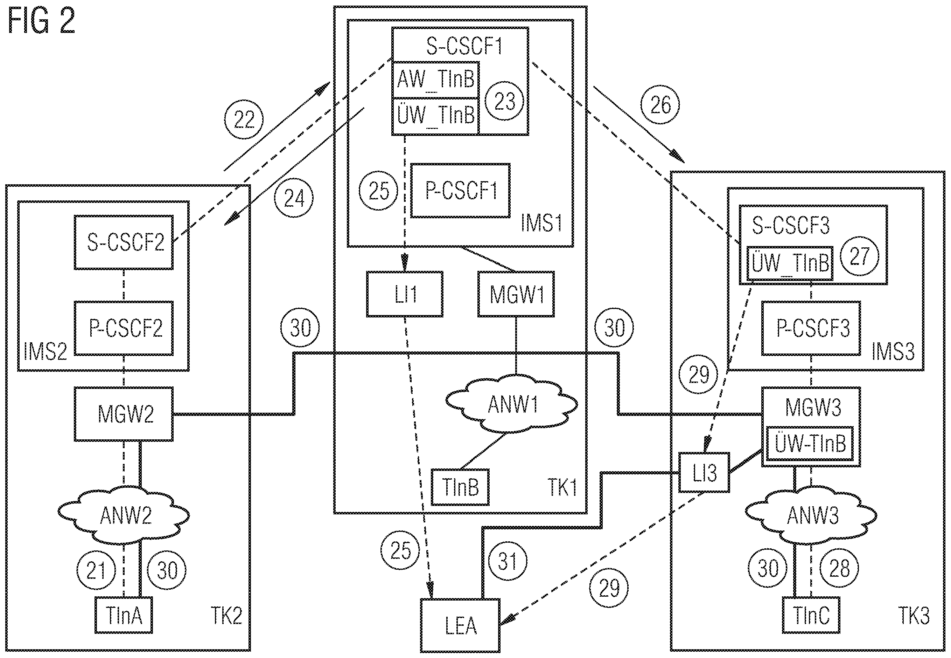

In Figur 2 sind wieder beispielhaft die paketorientierte Telekommunikationsnetze TK1, TK2 und TK3, an welche beispielsweise über Zugangsnetze ANW1, ANW2, ANW3 Teilnehmer Tln A, Tln B, Tln C angebunden sind, dargestellt. Die paketorientierten Telekommunikationsnetze TK1, TK2, TK3 umfassen wieder jeweils ein IP Multimedia Subsystem IMS1, IMS2, IMS3, in welchem in beispielhafter Weise die Vermittlungsfunktionen - Proxy Call Session Control-Funktionen P-CSCF1, P-CSCF2, P-CSCF3 und Serving Call Session Control-Funktionen S-CSCF1, S-CSCF2, S-CSCF3 dargestellt sind.

Neben der Lawful Interception-Schnittstelle LI1 des paketorientierten Telekommunikationsnetz TK1 ist im paketorientierten Telekommunikationsnetz TK3 ebenfalls eine Lawful Interception-Schnittstelle LI3 dargestellt, über welche ebenfalls überwachungsrelevante Daten (z.B. Gesprächsinhalte, E-Mail-Inhalte, verbindungsrelevante Daten, etc.) an die Überwachungseinrichtung LEA einer zur Überwachung berechtigten Stelle oder Behörde wie z.B. Polizei, Zollfahndung, etc. übertragen werden können.

Wie bei Figur 1 soll ebenfalls der Teilnehmer Tln B des paketorientierten Telekommunikationsnetzes TK1 überwacht werden, deshalb wird die die Kennung (z.B. SIP-URL) dieses Teilnehmers Tln B als so genannter Target Identifier gekennzeichnet (z.B. in eine spezielle Liste eingetragen, die auf den Vermittlungsfunktionen S-CSCF1, S-CSCF2, S-CSCF3, P-CSCF1, P-CSCF2, P-CSCF3 abgelegt ist), damit eine Überwachung ÜW_TlnB durch die Serving Call Session Control-Funktion S-CSCF1, in der der Teilnehmer Tln B üblicherweise lokalisiert ist, erkannt und angestoßen werden kann.

Zusätzlich ist für die Kennung des zu überwachenden Teilnehmers Tln B wieder eine Anrufweiterschaltung AW_TlnB in der Serving Call Session Control-Funktion S-CSCF1 eingerichtet. Durch diese Anrufweiterschaltung AW_TlnB wird eine Verbindung, die an den Teilnehmer Tln B gerichtet ist, an beispielsweise einen Zugangspunkt eines Teilnehmers Tln C weitergeleitet, dessen Kennung nicht als Target Identifier für eine Überwachung gekennzeichnet ist.

Wird - wie beim schematischen Ablauf in Figur 1 - von einem an das paketorientierten Telekommunikationsnetz TK2 angebundenen Teilnehmer Tln A eine Verbindung zum zu überwachenden Teilnehmer Tln B des paketorientierten Telekommunikationsnetz TK1 aufgebaut, so wird in einem ersten Schritt 21 der Verbindungsaufbau von Zugangsnetz ANW2 über das Media-Gateway MGW2 zur Proxy Call Session Control-Funktion P-CSCF2 der IP Multimedia Subsystems IMS2 signalisiert. Die Signalisierung wird dann an die Serving Call Session Control-Funktion S-CSCF2 des IP Multimedia Subsystems IMS2 weitergeleitet. In einem zweiten Schritt 22 wird von der Serving Call Session Control-Funktion S-CSCF2 des IP Multimedia Subsystems IMS2 die Serving Call Session Control-Funktion S-CSCF1 des IP Multimedia Subsystems IMS2 kontaktiert. Dabei wird eine Anfrage für einen Verbindungsaufbau mit dem Teilnehmer Tln B z.B. in Form einer SIP-Nachricht zur Serving Call Session Control-Funktion S-CSCF1 übertragen.

In einem dritten Schritt 23 wird von der Serving Call Session Control-Funktion S-CSCF1 erkannt, einerseits die Anrufweiterschaltung AW_TlnB für den zu überwachenden Teilnehmer TlnB erkannt. Anderseits wird auch festgestellt, dass die Kennung des Teilnehmers Tln B für eine Überwachung ÜW_TlnB gekennzeichnet ist und daher ein Parameter (z.B. die Kennung des zu überwachenden Teilnehmers Tln B) in eine Signalisierungsnachricht (z.B. SIP-Nachricht), mit der die Anrufweiterschaltung signalisiert wird, eingetragen. Zum Eintragen des Parameters (z.B. der Kennung) kann der so genannte SIP History-Info Header oder der so genannte SIP Diversion Header (aus IETF draft-levy-sip-diversion-08) verwendet werden.

Erst nachdem die Kennung des zu überwachenden Teilnehmers Tln B in die Signalisierungsnachricht (z.B. SIP-Nachricht) eingetragen worden ist, wird in einem vierten Schritt 24 die Anrufweiterschaltung z.B. mittels der SIP-Nachricht an die Serving Call Session Control-Funktion S-CSCF2 des IP Multimedia Subsystem IMS2 im paketorientierten Telekommunikationsnetz TK2 des rufenden Teilnehmers Tln A zurückgemeldet. Parallel dazu wird in einem fünften Schritt 25 aufgrund der Überwachung ÜW_TlnB des Teilnehmers Tln B die Signalisierung - z.B. eine Kopie der SIP-Nachricht - der Anrufweiterschaltung über die Lawful Interception-Schnittstelle LI1 an die Überwachungseinrichtung LEA der zur Überwachung berechtigten Stelle oder Behörde weitergeleitet.

In einem sechsten Schritt 26 wird nun aufgrund der Anrufweiterschaltung AW_TlnB eine Anfrage für einen Verbindungsaufbau mit dem Zugangspunkt des Teilnehmers Tln C z.B. in Form einer SIP-Nachricht zur Serving Call Session Control-Funktion S-CSCF3 des IP Multimedia Subsystems IMS3 im paketorientierten Telekommunikationsnetz TK3 gesendet. In einem siebten Schritt 27 wird die Signalisierungsnachricht (z.B. SIP-Nachricht) von der Serving Call Session Control-Funktion S-CSCF3 geprüft. Beispielsweise werden in den SIP History-Info Header oder in den so genannte SIP Diversion Header eingetragene Parameter (z.B. Kennung eines zu überwachenden Teilnehmers Tln B) geprüft, ob sie als Target Identifier für eine Überwachung gekennzeichnet sind - z.B. ob die im SIP History-Info Header oder im SIP Diversion Header eingetragene Kennung des Teilnehmers Tln B in der speziellen Liste mit den zu überwachenden Kennungen steht).

Wird bei dieser Überprüfung festgestellt, dass z.B. die Kennung des weitergeleiteten Teilnehmers Tln B eine zu überwachende Kennung ist, so wird zwar einerseits in einem achten Schritt 28 die Signalisierung vom IP Multimedia Subsystem IMS3 beispielsweise über ein Media-Gateway MGW3 zum Zugangsnetz ANW3 - und damit zum Zugangspunkt des Teilnehmers Tln C übertragen. Anderseits wird in einem neunten Schritt 29 aufgrund der festgestellten Überwachung ÜW_TlnB von der Serving Call Session Control-Funktion S-CSCF3 die Überwachung des weitergeleiteten Teilnehmers Tln B eingeleitet. Das bedeutet, dass beispielsweise die Signalisierungsinformation (z.B. eine Kopie der SIP-Nachrichten) von der Serving Call Session Control-Funktion S-CSCF3 über die Lawful Interception-Schnittstelle LI3 des paketorientierten Telekommunikationsnetzes TK3 an die Überwachungseinrichtung LEA der zur Überwachung berechtigten Stelle oder Behörde gesendet wird.

In einem zehnten Schritt 30 wird dann die Verbindung für eine Datenübertragung (z.B. IP-Telefonie, E-Mail, etc.) über die jeweiligen Media-Gateways MGW2, MGW3 der jeweiligen paketorientierten Telekommunikationsnetze TK2, TK3 direkt zwischen dem rufenden Teilnehmer Tln A (bzw. seinem Zugangspunkt) und dem Zugangspunkt des Teilnehmers Tln C aufgebaut. Dabei wird aber in einem elften Schritt 31 auch eine Verbindung für Datenübertragung vom Media-Gateway MGW3 des paketorientierten Telekommunikationsnetzes TK3 über die Lawful Interception-Schnittstelle LI3 des paketorientierten Telekommunikationsnetzes TK3 zur Überwachungseinrichtung LEA der zur Überwachung berechtigten Stelle oder Behörde eingerichtet, damit die übertragenen Inhalte von der Überwachungseinrichtung LEA z.B. aufgezeichnet, abgehört, etc. werden können.

Die Überprüfung bzw. Abfrage zur Überwachung ÜW_TlnB für die Signalisierungsinhalte (für die so genannten Interception Related Information (IRI)) kann in Erweiterung zum bisher beschriebenen in allen involvierten Vermittlungsfunktionen S-CSCF1, S-CSCF2, S-CSCF3, P-CSCF1, P-CSCF2, P-CSCF3, in denen ein Teilnehmer als zu überwachender Teilnehmer Tln B (z.B. anhand einer dort abgelegten speziellen Liste mit zu überwachenden Kennungen) identifiziert werden kann, angestoßen und durchgeführt werden. Damit können auch Anforderungen für die Überwachung ÜW_TlnB erfüllt werden, bei denen Teile der Kommunikation einer Verbindung eines zu überwachenden Teilnehmers Tln B außerhalb des Einflussbereiches der zur Überwachung berechtigten Stelle oder Behörde (z.B. in einem anderen Land, etc.) stattfinden.

Außerdem kann die Überwachung ÜW_TlnB des Inhaltes einer Verbindung bei Anrufweiterschaltung AW_TlnB - des so genannten Content of Communication (CC) - in allen "Transit"-Netzelementen, in denen ein Teilnehmer als zu überwachender Teilnehmer Tln B (z.B. anhand einer dort abgelegten speziellen Liste mit zu überwachenden Kennungen) identifiziert werden kann, angestoßen und durchgeführt werden. Solche "Transit"-Netzelemente sind z.B. Media-Gateways MGW3, Serving GPRS Support Nodes (SGSN), welcher z.B. in einem General Packet Radio Service (GPRS) oder in einer Packet Switch Domain des UMTS-Netzes für ein Erkennen sowie Durchführen einer Datenübertragung vom bzw. zum Endgerät eines Teilnehmers Tln A, Tln B, Tln C eingesetzt wird, oder Session Border Controller (SBC), welcher bei Voice-over-IP in den Verbindungen für Signalisierung und Datenübertragung zwischen den Teilnehmern Tln A, Tln B, Tln C eingesetzt werden kann, um beispielsweise einen Verbindungsaufbau zwischen zwei Endgeräten zu ermöglichen, von denen unterschiedliche Protokolle (z.B. SIP, H.323, etc.) für Voice-over-IP verwendet werden, etc.

Das Verfahren ist nicht nur für eine einmalige Anrufweiterschaltung AW_TlnB - wie in Figur 2 der Einfachheit halber beschrieben - anwendbar, sondern für mehrere Anrufweiterschaltungen AW_TlnB in Serie. Für jede Anrufweiterschaltung AW_TlnB wird ein Parameter (z.B. Kennung des in der jeweiligen Vermittlungsfunktion registrierten Teilnehmers) eingetragen, bei einer terminierenden Vermittlungsfunktion S-CSCF3 kann dann eine Überwachung ÜW_TlnB initiiert werden, nachdem alle für die Weiterleitungen eingetragenen Parameter geprüft worden sind.

Außerdem ist das erfindungsgemäße Verfahren nicht nur in Kombination mit einem IP Multimedia Subsystem IMS1, IMS2, IMS3 und mit SIP einsetzbar, sondern kann auch in paketorientierten Telekommunikationsnetzen, in denen nur SIP (ohne IP Multimedia Subsystem IMS1, IMS2, IMS3) oder ein anderes Protokoll für das Management der Verbindungen wie z.B. H.323 verwendet wird, eingesetzt werden.

## Patentansprüche

1. Verfahren für Lawful Interception bei Anrufweiterschaltung (AW_TlnB) in einem paketorientierten Telekommunikationsnetz (TK1, TK2, TK3), in welchem Vermittlungsfunktionen (S-CSCF1, S-CSCF2, S-CSCF3, P-CSCF1, P-CSCF2, P-CSCF3) von Servern zur Verfügung gestellt werden und wobei Verbindungen eines Teilnehmers (Tln B) mit Anrufweiterschaltung (AW_TlnB) mittels Lawful Interception überwacht werden sollen, umfassend folgende Schritte:
- Bekanntgabe einer Überwachung (ÜW_TlnB) der Verbindungen des Teilnehmers (Tln B) in einer ersten Vermittlungsfunktion (S-CSCF1), welche für den angerufenen Teilnehmer (Tln B) mit Anrufweiterschaltung (AW_TlnB) zuständig ist,
- Schreiben einer Kennung dieses Teilnehmers (Tln B) in einen vorgegebenen Parameter eines Vermittlungsprotokolls (23) von der ersten Vermittlungsfunktion (S-CSCF1),
- Überwachung (ÜW_TlnB) des angerufenen Teilnehmers (Tln B) von einer dritten Vermittlungsfunktion (S-CSCF3), zu welcher der Verbindung weitergeschaltet worden ist, wobei die Überwachung (ÜW_TlnB) anhand des vorgegebenen Parameters des Vermittlungsprotokolls erkannt und dann eingeleitet wird (27, 29, 31).

2. Verfahren nach Anspruch 1, wobei das Verfahren weiter umfasst dass dann erst eine Signalisierung der Anrufweiterschaltung (AW_TlnB) an eine zweite Vermittlungsfunktion (S-CSCF2), welche für einen anrufenden Teilnehmer (Tln A) zuständig ist, durchgeführt wird (24), wenn die Kennung des Teilnehmers (Tln B) in den vorgegebenen Parameter des Vermittlungsprotokolls geschrieben wurde (23).

3. Verfahren nach einem der Ansprüche 1 oder 2, wobei im paketorientierten Telekommunikationsnetz (TK1, TK2, TK3) für den zu überwachenden Teilnehmer (Tln B) mehrere Anrufweiterschaltungen (AW_Tln B) in Serie durchgeführt werden.

4. Verfahren nach einem der Ansprüche 1 bis 3, wobei im paketorientierten Telekommunikationsnetz (TK1, TK2, TK3) als Vermittlungsprotokoll das Session Initiation Protocol SIP eingesetzt wird.

5. Verfahren nach Anspruch 4, wobei die Kennung des angerufenen und zu überwachenden Teilnehmers (Tln B) in den SIP History-Info Header gemäß RFC 4244 oder in den SIP Division Header gemäß IETF draft-levy-sip-diversion-08 eingetragen wird (23).

6. Verfahren nach einem der Ansprüche 1 bis 5, wobei das paketorientierte Telekommunikationsnetz (TK1, TK2, TK3) ein IP Multimedia Subsystem (IMS1, IMS2, IMS3) umfasst, von welchem die Vermittlungsfunktion (S-CSCF1, S-CSCF2, S-CSCF3, P-CSCF1, P-CSCF2, P-CSCF3) als Funktion zur Verfügung gestellt wird.

7. Verfahren nach einem der Ansprüche 1 bis 3, wobei im paketorientierten Telekommunikationsnetz (TK1, TK2, TK3) als Vermittlungsprotokoll das H.323-Protokoll verwendet wird.

8. Verfahren nach einem der Ansprüche 1 bis 7, wobei Inhalte der weitergeleiteten Verbindung über ein Media-Gateway (MGW3) oder über eine Gatekeeper oder Serving GPRS Support Node oder Session Border Controller an eine überwachende Instanz (LEA) geleitet werden (31).

9. Verfahren nach einem der Ansprüche 1 bis 8, wobei die Überwachung (ÜW_TlnB) der Inhalte der weitergeleiteten Verbindung im Media-Gateway (MGW3) oder Serving GPRS Support Node oder Session Border Controller ohne Wechselwirkung mit der Vermittlungs-funktion (S-CSCF3) eingeleitet und durchgeführt wird.

10. Verfahren nach einem der Ansprüche 1 bis 9, wobei Lawful Interception nur für bestimmte von Servern des paketorientierten Telekommunikationsnetzes zur Verfügung gestellten Vermittlungsfunktionen (S-CSCF1, S-CSCF2, S-CSCF3, P-CSCF1, P-CSCF2, P-CSCF3) und/oder in Netzelementen wie dem Media-Gateway (MGW3) oder Serving GPRS Support Node oder Session Border Controller aktiviert wird.

11. Eine erste Vermittlungsvorrichtung (S-CSCF1) für Lawful Interception zur Überwachung eines ersten Teilnehmers (Tln B) mit Anrufweiterschaltung (AW_TlnB) in einem paketorientierten Telekommunikationsnetz (TK1, TK2, TK3) umfassend
- ein Mittel zum Feststellen einer Überwachung (ÜW_TlnB) von Anrufen die mit dem ersten Teilnehmer (Tln B) assoziiert sind;
- ein Mittel zum Empfangen einer Verbindungsaufbauanfrage (22) eines anrufenden Teilnehmer (Tln A) mit dem ersten Teilnehmer (Tln B);
- ein Mittel zum Erkennen dass die Verbindungsaufbauanfrage an einen zweiten Teilnehmer (Tln C) weitergeleitet werden soll(23, AW_TlnB);
- ein Mittel zum Schreiben einer Kennung des ersten Teilnehmers (Tln B) in einen vorgegebenen Parameter eines Vermittlungsprotokolls (23);
- ein Mittel zum Senden einer Signalisierung an eine dritte Vermittlungsvorrichtung (S-CSCF3), wobei die Signalisierung den Parameter mit der Kennung des ersten Teilnehmers (Tln B) umfasst (26).

12. Die erste Vermittlungsvorrichtung nach Anspruch 11 umfassend ein weiteres Mittel zum Senden einer weiteren Signalisierung der Anrufweiterschaltung (AW_TlnB) an eine zweite Vermittlungsfunktion (S-CSCF2) welche für den anrufenden Teilnehmer (Tln A) zuständig ist (24), wenn die Kennung des Teilnehmers (Tln B) in den vorgegebenen Parameter des Vermittlungsprotokolls geschrieben wurde (23).

13. Eine Vermittlungsvorrichtung für Lawful Interception zur Überwachung eines ersten Teilnehmers (Tln B) in einem paketorientierten Telekommunikationsnetz (TK1, TK2, TK3) umfassend
- ein Mittel zum Empfangen einer Signalisierung zum Aufbau einer von einem ersten Teilnehmer (Tln B) weitergeleiteten Verbindung, wobei die Signalisierung einen Parameter mit der Kennung des ersten Teilnehmers (Tln B) umfasst (26);
- ein Mittel zum Einleiten der Überwachung des ersten Teilnehmers (ÜW_Tlnb), wenn die Überwachung (ÜW_TlnB) anhand des Parameters des Vermittlungsprotokolls erkannt wird (27).

14. Die Vermittlungsvorrichtung nach Anspruche 13, wobei die Vermittlungsvorrichtung weiter umfasst
- die Mittel des Anspruchs 11 um für den zu überwachenden ersten Teilnehmer (Tln B) eine weitere Anrufweiterschaltungen (AW_Tln B) zu unterstützen.

15. Die Vermittlungsvorrichtung nach einem der Ansprüche 11 bis 14, wobei die Signalisierung zum Signalisieren einer Anrufweiterleitung verwendet wird und/oder wobei als Vermittlungsprotokoll das Session Initiation Protocol SIP eingesetzt wird.

## Claims

1. Method for lawful interception during call forwarding (AW_TlnB) in a packet-oriented telecommunication network (TK1, TK2, TK3) in which switching functions (S-CSCF1, S-CSCF2, S-CSCF3, P-CSCF1, P-CSCF2, P-CSCF3) are provided by servers and wherein calls associated with a subscriber (Tln B) with call forwarding (AW_TlnB) are intended to be monitored by means of lawful interception, comprising the following steps:
- notification of monitoring (ÜW_TlnB) of the calls associated with the subscriber (Tln B) in a first switching function (S-CSCF1), which is responsible for the called subscriber (Tln B) with call forwarding (AW_TlnB),
- writing an identifier for this subscriber (Tln B) into a prescribed parameter of a switching protocol (23) by the first switching function (S-CSCF1),
- monitoring (ÜW_TlnB) of the called subscriber (Tln B) by a third switching function (S-CSCF3), to which the call has been forwarded, wherein the monitoring (ÜW_TlnB) is identified and then initiated (27, 29, 31) using the prescribed parameter of the switching protocol.

2. Method according to Claim 1, wherein the method further comprises first signaling (24) the call forwarding (AW_TlnB) to a second switching function (S-CSCF2), which is responsible for a calling subscriber (Tln A), if the identifier of the subscriber (Tln B) has been written (23) into the prescribed parameter of the switching protocol.

3. Method according to either of Claims 1 and 2, wherein a plurality of call forwarding operations (AW_Tln B) are performed in series in the packet-oriented telecommunication network (TK1, TK2, TK3) for the subscriber (Tln B) to be monitored.

4. Method according to one of Claims 1 to 3, wherein the switching protocol used in the packet-oriented telecommunication network (TK1, TK2, TK3) is the Session Initiation Protocol SIP.

5. Method according to Claim 4, wherein the identifier of the called subscriber (Tln B) to be monitored is entered (23) into the SIP History-Info header based on RFC 4244 or into the SIP Division header based on IETF draft-levy-sip-diversion-08.

6. Method according to one of Claims 1 to 5, wherein the packet-oriented telecommunication network (TK1, TK2, TK3) comprises an IP multimedia subsystem (IMS1, IMS2, IMS3) which provides the switching function (S-CSCF1, S-CSCF2, S-CSCF3, P-CSCF1, P-CSCF2, P-CSCF3) as a function.

7. Method according to one of Claims 1 to 3, wherein the switching protocol used in the packet-oriented telecommunication network (TK1, TK2, TK3) is the H.323 protocol.

8. Method according to one of Claims 1 to 7, wherein contents of the forwarded call are routed (31) to a monitoring entity (LEA) via a media gateway (MGW3) or via a gatekeeper or serving GPRS support node or session border controller.

9. Method according to one of Claims 1 to 8, wherein the monitoring (ÜW_TlnB) of the contents of the forwarded call is initiated and performed in the media gateway (MGW3) or serving GPRS support node or session border controller without interaction with the switching function (S-CSCF3).

10. Method according to one of Claims 1 to 9, wherein lawful interception is activated only for particular switching functions (S-CSCF1, S-CSCF2, S-CSCF3, P-CSCF1, P-CSCF2, P-CSCF3) provided by servers in the packet-oriented telecommunication network, and/or in network elements such as the media gateway (MGW3) or serving GPRS support node or session border controller.

11. First switching apparatus (S-CSCF1) for lawful interception for monitoring a first subscriber (Tln B) with call forwarding (AW_TlnB) in a packet-oriented telecommunication network (TK1, TK2, TK3), comprising
- a means for detecting monitoring (ÜW_TlnB) of calls that are associated with the first subscriber (Tln B);
- a means for receiving a call setup request (22) from a calling subscriber (Tln A) to the first subscriber (Tln B);
- a means for identifying that the call setup request is meant to be forwarded (23, AW_TlnB) to a second subscriber (Tln C);
- a means for writing an identifier for the first subscriber (Tln B) into a prescribed parameter of a switching protocol (23);
- a means for sending signaling to a third switching apparatus (S-CSCF3), wherein the signaling comprises (26) the parameter with the identifier of the first subscriber (Tln B).

12. First switching apparatus according to Claim 11, comprising a further means for sending further signaling of the call forwarding (AW_TlnB) to a second switching function (S-CSCF2), which is responsible (24) for the calling subscriber (Tln A), if the identifier of the subscriber (Tln B) has been written (23) into the prescribed parameter of the switching protocol.

13. Switching apparatus for lawful interception for monitoring a first subscriber (Tln B) in a packet-oriented telecommunication network (TK1, TK2, TK3), comprising:
- a means for receiving signaling for setting up a call forwarded from a first subscriber (Tln B), wherein the signaling comprises (26) a parameter with the identifier of the first subscriber (Tln B);
- a means for initiating the monitoring of the first subscriber (ÜW_TlnB) if the monitoring (ÜW_TlnB) is identified (27) using the parameter of the switching protocol.

14. Switching apparatus according to Claim 13, wherein the switching apparatus further comprises
- the means of Claim 11 in order to support further call forwarding operations (AW_Tln B) for the first subscriber (Tln B) to be monitored.

15. Switching apparatus according to one of Claims 11 to 14, wherein the signaling is used for signaling a call forwarding operation and/or wherein the switching protocol used is the Session Initiation Protocol SIP.

## Revendications

1. Procédé d'interception licite lors d'un transfert d'appel (AW_TlnB) dans un réseau de télécommunication en mode paquets (TK1, TK2, TK3), dans lequel des fonctions de commutation (S-CSCF1, S-CSCF2, S-CSCF3, P-CSCF1, P-CSCF2, P-CSCF3) sont mises à disposition par des serveurs et des liaisons d'un abonné (Tln B) avec transfert d'appel (AW_TlnB) doivent être surveillées au moyen de l'interception licite, comprenant les étapes suivantes :
- notification d'une surveillance (ÜW_TlnB) des liaisons de l'abonné (Tln B) dans une première fonction de commutation (S-CSCF1) qui est compétente pour l'abonné (Tln B) appelé avec transfert d'appel (AW_TlnB),
- écriture d'un identifiant de cet abonné (Tln B) dans un paramètre prédéfini d'un protocole de commutation (23) de la première fonction de commutation (S-CSCF1),
- surveillance (ÜW_TlnB) de l'abonné (Tln B) appelé par une troisième fonction de commutation (S-CSCF3) à laquelle la liaison a été transférée, la surveillance (ÜW_TlnB) étant reconnue au moyen du paramètre prédéfini du protocole de commutation et ensuite initiée (27, 29, 31).

2. Procédé selon la revendication 1, le procédé comprenant en outre le fait qu'une signalisation du transfert d'appel (AW_TlnB) à une deuxième fonction de commutation (S-CSCF2), laquelle est compétente pour un abonné appelant (Tln A), n'est effectuée (24) que lorsque l'identifiant de l'abonné (Tln B) a été écrit dans le paramètre prédéfini du protocole de commutation (23) .

3. Procédé selon l'une des revendications 1 ou 2, plusieurs transferts d'appel (AW_Tln B) étant effectués en série dans le réseau de télécommunication en mode paquets (TK1, TK2, TK3) pour l'abonné (Tln B) à surveiller.

4. Procédé selon l'une des revendications 1 à 3, le protocole d'initiation de session, SIP, étant utilisé comme protocole de commutation dans le réseau de télécommunication en mode paquets (TK1, TK2, TK3).

5. Procédé selon la revendication 4, l'identifiant de l'abonné (Tln B) appelé et à surveiller étant intégré dans l'en-tête d'information historique SIP selon RFC 4244 ou dans l'en-tête de division SIP selon le projet « draft-levy-sip-diversion-08 » de l'IETF (23) .

6. Procédé selon l'une des revendications 1 à 5, le réseau de télécommunication en mode paquets (TK1, TK2, TK3) comprenant un sous-système multimédia IP (IMS1, IMS2, IMS3) par lequel la fonction de commutation (S-CSCF1, S-CSCF2, S-CSCF3, P-CSCF1, P-CSCF2, P-CSCF3) est mise à disposition en tant que fonction.

7. Procédé selon l'une des revendications 1 à 3, le protocole H.323 étant utilisé en tant que protocole de commutation dans le réseau de télécommunication en mode paquets (TK1, TK2, TK3).

8. Procédé selon l'une des revendications 1 à 7, les contenus de la liaison transférée étant acheminés par le biais d'une passerelle média (MGW3) ou par le biais d'un portier ou d'un noeud support GPRS de desserte ou d'un contrôleur de session en limite à une instance surveillée (LEA) (31).

9. Procédé selon l'une des revendications 1 à 8, la surveillance (ÜW_TlnB) des contenus de la liaison transférée étant initiée et effectuée dans la passerelle média (MGW3) ou le noeud support GPRS de desserte ou le contrôleur de session en limite sans interaction avec la fonction de commutation (S-CSCF3).

10. Procédé selon l'une des revendications 1 à 9, l'interception licite n'étant activée que pour certaines des fonctions de commutation (S-CSCF1, S-CSCF2, S-CSCF3, P-CSCF1, P-CSCF2, P-CSCF3) mises à disposition par des serveurs du réseau de télécommunication en mode paquets et/ou dans des éléments de réseau comme la passerelle média (MGW3) ou le noeud support GPRS de desserte ou le contrôleur de session en limite.

11. Premier dispositif de commutation (S-CSCF1) pour l'interception licite en vue de surveiller un premier abonné (Tln B) avec transfert d'appel (AW_TlnB) dans un réseau de télécommunication en mode paquets (TK1, TK2, TK3), comprenant
- un moyen pour définir une surveillance (ÜW_TlnB) des appels qui sont associés avec le premier abonné (Tln B) ;
- un moyen pour recevoir une demande d'établissement de liaison (22) d'un abonné appelant (Tln A) avec le premier abonné (Tln B) ;
- un moyen pour reconnaître que la demande d'établissement de liaison doit être transférée à un deuxième abonné (Tln C) (23, AW_TlnB) ;
- un moyen pour écrire un identifiant du premier abonné (Tln B) dans un paramètre prédéfini d'un protocole de commutation (23) ;
- un moyen pour envoyer une signalisation à un troisième dispositif de commutation (S-CSCF3), la signalisation comprenant le paramètre avec l'identifiant du premier abonné (Tln B) (26).

12. Premier dispositif de commutation selon la revendication 11, comprenant un moyen supplémentaire pour envoyer une signalisation supplémentaire du transfert d'appel (AW_TlnB) à une deuxième fonction de commutation (S-CSCF2) qui est compétente pour l'abonné appelant (Tln A) (24) lorsque l'identifiant de l'abonné (Tln B) a été écrit dans le paramètre prédéfini du protocole de commutation (23).

13. Dispositif de commutation pour l'interception licite en vue de surveiller un premier abonné (Tln B) dans un réseau de télécommunication en mode paquets (TK1, TK2, TK3), comprenant
- un moyen pour recevoir une signalisation pour établir une liaison transférée par le premier abonné (Tln B), la signalisation comprenant un paramètre avec l'identifiant du premier abonné (Tln B) (26) ;
- un moyen pour initier la surveillance du premier abonné (ÜW_TlnB) lorsque la surveillance (ÜW_TlnB) est reconnue au moyen du paramètre du protocole de commutation (27).

14. Dispositif de commutation selon la revendication 13, le dispositif de commutation comprenant en outre
- les moyens selon la revendication 11 pour assister un transfert d'appel (AW_Tln B) supplémentaire pour le premier abonné (Tln B) à surveiller.

15. Dispositif de commutation selon l'une des revendications 11 à 14, la signalisation étant utilisée pour signaler un transfert d'appel et/ou le protocole d'initiation de session, SIP, étant utilisé comme protocole de commutation.
